# EUROPEAN PATENT APPLICATION

(11) **EP 2 611 127 A1**
(43) Date of publication of application: **03.07.2013**
(21) Application number: 12198914.9
(22) Date of filing: 21.12.2012
(51) Int. Cl.: H04M 3/56, H04N 7/15, G06F 9/50

(54) **Cloud-based content mixing into one stream**

(30) Priority: 29.12.2011 US 201161581227 P
(71) Applicant: Gface GmbH, 60322 Frankfurt/Main (DE)
(72) Inventor: Yerli, Cevat, 60314 Frankfurt/Main (DE)
(74) Representative: Schmidt, Steffen

(57) **Abstract**

A network-based system of providing a combined single data stream to at least one user or user group equipment, the system including a computing cloud receiving different data from a plurality of data sources and generating from said data a single data stream to be provided to at least one remote user or user group; at least one user or user group equipment having access to the computing cloud for receiving said combined single data stream to be outputted for the at least one remote user or user group.

## Description

### Field of the Invention

The present invention relates to a network-based system and to a method of providing a combined single data stream to at least one user or user group. In particular the present invention relates to a network-based system and to a method of computing, in particular rendering, different media data, for generating said single data stream, wherein the media data may come from different data sources such as game servers and/or ad-servers and the like. In particular the invention relates to a system and to a method that enables the mixing or combining of two or more multimedia streams into a single stream, via a cloud-based rendering.

### Background of Invention

There are known network-based systems and method for providing cloud computing to a plurality of clients such as mobile devices. Such a system is described in US 2010/0257252 Al.

Typically, current systems that render several media streams for a viewer do so on the viewer's own client machine. For example, a browser installed on a user's PC or mobile device renders videos, audio files and the like using the computation power available on the client machine. Such a system is described in US 2009/0288019 A1. This technique automatically sets a limit of what can be displayed and in what quality. Therefore the quality might be not sufficient for an optimal experience of the content.

### Summary of Invention

According to a first aspect of the invention there is described a network-based system of providing a combined single data stream to at least one user or user group equipment, the system comprising:
a computing cloud receiving different data from a plurality of data sources and generating from said data a single data stream to be provided to at least one remote user or user group;
at least one user or user group equipment having access to the computing cloud for receiving said combined single data stream to be outputted for the at least one remote user or user group.

According to a second aspect of the invention there is described a method of providing a combined single data stream to at least one user or user group equipment within a network-based system, the method comprising the steps of:
receiving at a computing cloud different data from a plurality of data sources;
generating from said data a single data stream to be provided to at least one remote user or user group; and
receiving at the at least one user or user group equipment said combined single data stream to be outputted for the at least one remote user or user group.

The described systems and methods use a render cloud to compute the stream online, before transfering the rendered data to the client's device. This way, the quality of the content is always at a premium level (or any quality level desired by the content provider). The structure of the cloud provides a constant high level of performance through the distributed nature of the cloud server (s).

The content itself can be any multimedia, such as audio, video, advertisements, still pictures, animations, 3D video and others. It can also be interactive in its presentation, although this does not have to be the case. Thus the different data may comprise media data, in particular video, audio, still images and/or graphics, from said plurality of data sources, and wherein the computing cloud renders said different data for generating said single data stream to be provided to the at least one remote user.

The plurality of data sources may comprise media data servers and/or sources, in particular game servers and/or ad-servers. And the computing cloud may comprise a plurality of cloud servers, in particular media renderers, performing the data computations, in particular the rendering of media data, to provide said single data stream. The plurality of cloud servers may perform said data computations according to at least one stream build list provided by a service and/or by said data sources. Moreover, the plurality of cloud servers may perform said data computations for a predefined quality of service independently from any condition and/or characteristic of the user equipment's display.

Term "stream build list" shall define a list of logical media or other items that are comprising the stream. The list also contains additional meta data that defines where the logical media items are placed in the stream, in terms of time and space. The list can be, but doesn't have to be, formatted as a xml file listing all elements with their parameters. This list is the structure that is used by the system to generate one stream from the single files.

In one embodiment the plurality of cloud servers generates said single data stream to be provided to a plurality of user equipments. In another embodiment the plurality of cloud servers generates individually for a plurality of users or groups of users several single data streams to be provided individually to the users and/or groups of users.

The at least one user equipment may comprise at least one client computer or terminal being connected via a network, in particular an IP network, to said plurality of cloud servers. Preferably the at least one user equipment interacts with said plurality of cloud servers to modify the provided single data stream. And the plurality of cloud servers may provide said modified single data stream to several user equipments only if said user equipments interact with said plurality of cloud to indicate the same choice of modification.

The described method of providing said combined single data stream may further comprise at least one of the following steps:
requesting a computation, in particular a rendering, of said different data for generating said single data stream;
generating said single data stream according to a stream build list provided by a service and/or by said data sources;
transmitting via a network, in particular an IP network, said single data stream to the at least one user equipment which in particular is a client device; and/or
displaying the data stream at the one user equipment which in particular is a client device.

### Brief Description of Drawings

Further features and advantages of the present invention, as well as the structure and operation of various illustrative embodiments of the present invention, are described in detail below with reference to the accompanying schematic drawings, wherein:
- Fig. 1: shows a system structure for a first embodiment of a system according to the present invention.
- Fig. 2: shows a functional diagram for a second embodiment of a system according to the present invention.
- Fig. 3: shows a functional diagram for a third embodiment of a system according to the present invention.
- Fig. 4: shows a flow chart for implementing said embodiments of the present invention.

### Detailed Description of Preferred Embodiments

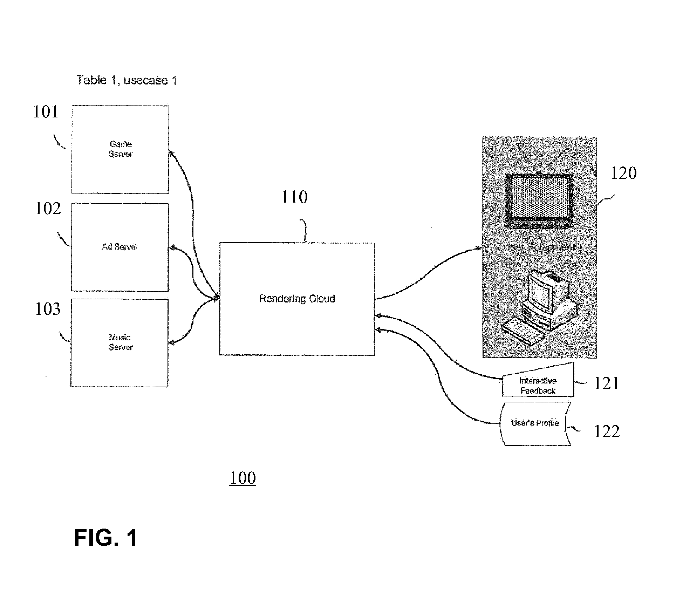

As shown in Fig. 1, the described system 100 uses a render cloud 110 to compute the stream online, before transferring the rendered data to the user equipments or client's devices 120. This way, the quality of the content is always at a premium level (or any quality level desired by the content provider). The structure of the cloud 110 provides a constant high level of performance through the distributed nature of the cloud server(s).

The content itself can be any media data, in particular multimedia data, such as audio, video, advertisements, still pictures, animations, 3D video and others. It can also be interactive in its presentation, although this does not have to be the case. The media data can come from different data sources such as game servers 101, ad servers 102, music servers 102 and the like.

Rendering of the stream is performed as follows:

The system 100 gets the necessary data from connected data servers 101 - 102, together with the stream-build list that defines the order and composition of the single contents. In addition, the stream is compressed with codecs as requested by the stream-build list - for instance, depending on the supported codecs on the client device, the stream is encoded with the preferred codec.

Fig. 1 shows the general structure of a system according to the invention. The system achieves that multiple source files are combined to a single data stream.

A user has a browser open with the following items active: he is playing a game, a music file is being played back and an advertisement is shown in an ad frame. All these single contents are combined on the server and streamed as a single video and audio stream to the user.

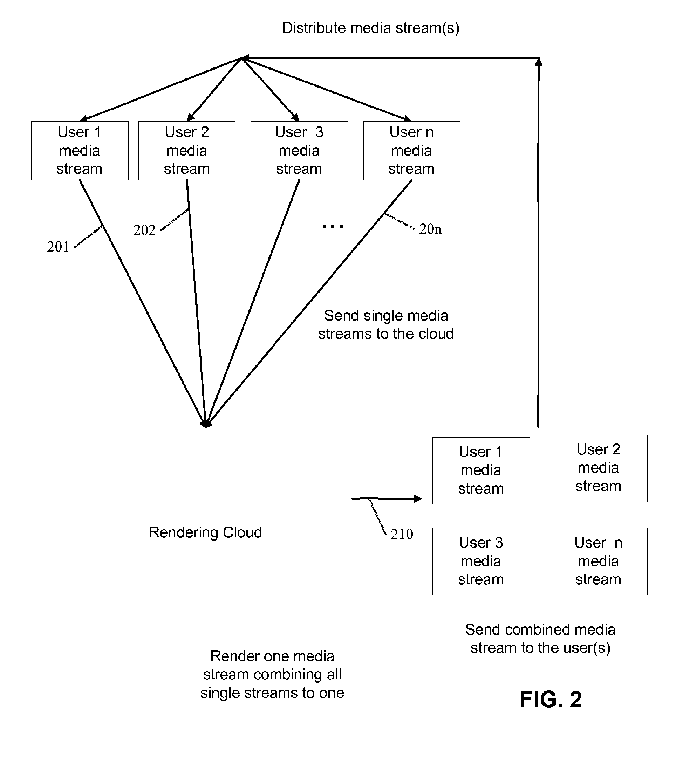

Fig. 2 shows a functional diagram for a system and method which provides a data stream 210 combining all input media data 201 - 20n to one user who has the option of changing view modes.

The user is watching videos online. Several videos are played simultaneously in frames next to each other. These videos are streamed as one video from the server. The user switches to a different view where the videos are stacked behind each other, slightly overlapping (stacking the videos in "3D" behind each other). The animation of moving from one view mode (videos next to each other) to the other (stacked view) is calculated on the server while the videos keep running. In the stacked view, the videos are still running.

Optionally, the view can be switched to a stereoscopic 3D view rendered on the server cloud.

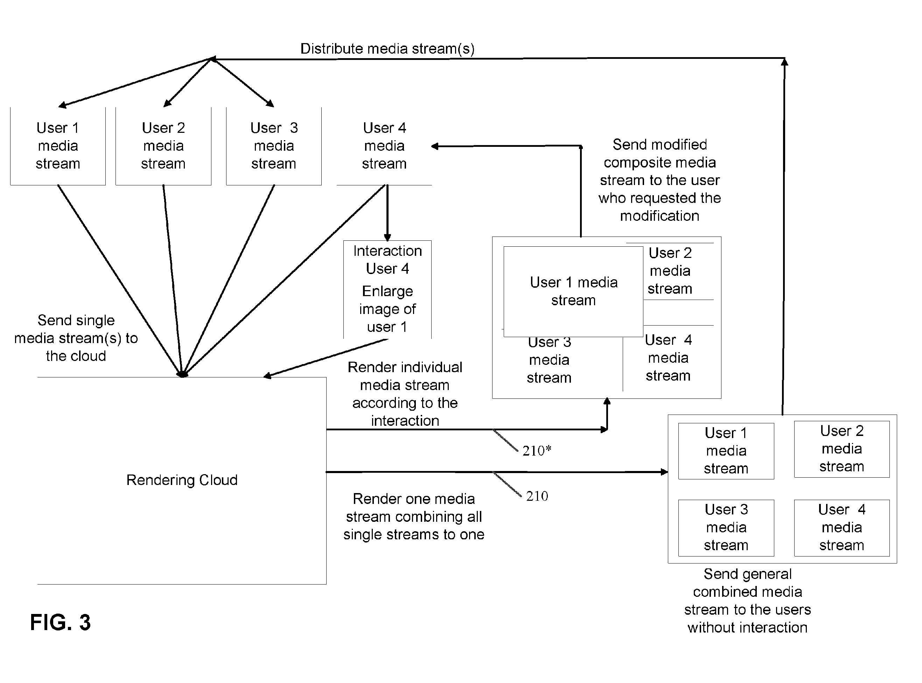

Fig. 3 shows another functional diagram which illustrates the feature of rendering individual media stream 210*. This can be used in game advertisement. The user is playing a game that Supports in-game advertisement. Inside the game, huge ad-boards are placed. A texture is projected inside the game on these ad-boards. The texture is streamed from the server cloud to the game while the game is connected. The game receives the stream as a texture that is automatically placed inside the game on the right object without additionally performance, independent from the displayed content.

In another embodiment (not shown) the system and method can provide a video conference stream: Many users want to join one video conference from different locations, using many video cameras for their source video. Every user is filmed by his separate video camera and streams his video stream onto the server cloud.

Inside the cloud all videos are by default combined to one default video stream, displaying every user (up to a certain amount) as a tiled video frame, e.g. 16 single video streams are tiled as 4 by 4 smaller video streams into one video stream), reducing significantly the required download bandwidths per user (see Fig. 2 and 3).

Every user can now interact with the default video stream and demand a certain video to be displayed enlarged inside the composited video. This request is send to the server cloud and the stream to this specific user will be modified to his liking (see Fig. 3). The system can switch anytime between the default stream and an individualized stream for each user and in case the individualized stream is applicable to more or all users, that stream can be shared to a group of users or all users.

The interaction is not limited to changing the size. All typical manipulations of a multimedia streams are possible, for example color changes, contrast or brightness, audio volume, and others.

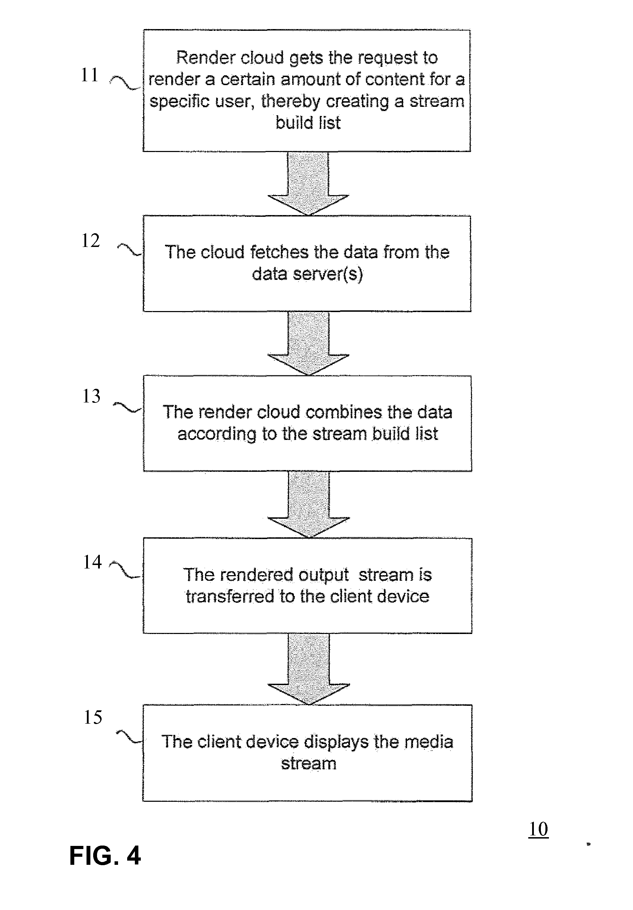

Fig. 4 shows a flow chart of a method 10 of providing a combined data stream. In a first step 11 the rendering cloud receives a request to render a certain amount of content (media data) for a specific user, thereby creating a stream build list. In a second step 12 the cloud servers receive the different media data from the sources (data servers). Then, in a step 13, the rendering cloud combines the data according to the stream build list. Afterwards, in step 14, the rendered output stream is transmitted / transferred to the client device (user equipment). Finally, in step 15, the client device outputs (displays) the media stream.

In this way the system may generate a combined video/audio stream from any media content, that may contain video, audio, still images, graphics and other media sources. All computations are done on the server side in the server cloud.

The renderer (rendering cloud) is able to combine / mix different content sources into one stream and can do this individually for every single user or user-groups.

The quality of the stream combination is independent of the client's display device.

The supplied video stream can be modified interactively by the user. That interactive stream can or would be served to the user only who does the interaction or served to more than one user if more users have same interaction choices.

## Claims

1. A network-based system of providing a combined single data stream to at least one user or user group equipment, the system comprising:
a computing cloud receiving different data from a plurality of data sources and
generating from said data a single data stream to be provided to at least one remote user or user group;
at least one user or user group equipment having access to the computing cloud for receiving said combined single data stream to be outputted for the at least one remote user or user group.

2. The network-based system of claim 1, wherein the different data comprises media data, in particular video, audio, still images and/or graphics, from said plurality of data sources, and wherein the computing cloud renders said different data for generating said single data stream to be provided to the at least one remote user.

3. The network-based system of claim 1 or 2, wherein the plurality of data sources comprises media data servers and/or sources, in particular game servers and/or ad-servers.

4. The network-based system according to one of the preceding claims, wherein the computing cloud comprises a plurality of cloud servers, in particular media renderers, performing the data computations, in particular the rendering of media data, to provide said single data stream.

5. The network-based system of claim 4, wherein the plurality of cloud servers performs said data computations according to at least one stream build list provided by a service and/or by said data sources.

6. The network-based system of claim 4 or 5, wherein the plurality of cloud servers performs said data computations for a predefined quality of service independently from any condition and/or characteristic of the user equipment's display.

7. The network-based system according to one of the claims 4 to 6, wherein the plurality of cloud servers generates said single data stream to be provided to a plurality of user equipments.

8. The network-based system according to one of the claims 4 to 7, wherein the plurality of cloud servers generates individually for a plurality of users or groups of users several single data streams to be provided individually to the users and/or groups of users.

9. The network-based system according to one of the claims 4 to 8, wherein the at least one user equipment comprises at least one client computer or terminal being connected via a network, in particular an IP network, to said plurality of cloud servers.

10. The network-based system according to one of the preceding claims, wherein the at least one user equipment interacts with said plurality of cloud servers to modify the provided single data stream.

11. The network-based system of claim 10, wherein the plurality of cloud servers provides said modified single data stream to several user equipments only if said user equipments interacts with said plurality of cloud servers to indicate the same choice of modification.

12. A method of providing a combined single data stream to at least one user or user group equipment within a network-based system, the method comprising the steps of:
receiving at a computing cloud different data from a plurality of data sources;
generating from said data a single data stream to be provided to at least one remote user or user group; and
providing to at least one user or user group equipment said combined single data stream to be outputted for the at least one remote user or user group.

13. The method of claim 12, further comprising at least one of the following steps:
requesting a computation, in particular a rendering, of said different data for generating said single data stream;
generating said single data stream according to a stream build list provided by a service and/or by said data sources;
transmitting via a network, in particular an IP network, said single data stream to the at least one user equipment which in particular is a client device; and/or
displaying the data stream at the one user equipment which in particular is a client device.
